# EUROPÄISCHE PATENTSCHRIFT

(11) **EP 3 097 388 B1**
(45) Veröffentlichungstag und Bekanntmachung des Hinweises auf die Patenterteilung: **15.07.2020**
(21) Anmeldenummer: 14803129.7
(22) Anmeldetag: 27.11.2014
(51) Int. Cl.: G01F 1/684, G01F 5/00

(54) **SENSORANORDNUNG ZUR BESTIMMUNG WENIGSTENS EINES PARAMETERS EINES DURCH EINE KANALSTRUKTUR STRÖMENDEN FLUIDEN MEDIUMS**
SENSOR ARRANGEMENT FOR DETERMINING AT LEAST ONE PARAMETER OF A FLUID MEDIUM FLOWING THROUGH A CHANNEL STRUCTURE
SYSTÈME DE DÉTECTION SERVANT À DÉTERMINER AU MOINS UN PARAMÈTRE D'UN MILIEU FLUIDE CIRCULANT DANS UNE STRUCTURE DE CONDUIT

(30) Priorität: 23.01.2014 DE 102014201213
(43) Veröffentlichungstag der Anmeldung: 30.11.2016
(73) Patentinhaber: Robert Bosch GmbH, 70442 Stuttgart (DE)
(72) Erfinder: MAIS, Torsten, 71636 Ludwigsburg (DE); WAGNER, Ulrich, 80689 Muenchen (DE); BEYRICH, Hans, 71691 Freiberg/N (DE)
(86) Internationale Anmeldenummer: PCT/EP2014/075743
(87) Internationale Veröffentlichungsnummer: WO 2015/110205

(56) Entgegenhaltungen:
- DE-A1-102010 020 264
- DE-A1-102010 061 348
- DE-A1-102012 211 133

## Beschreibung

### Stand der Technik

Aus dem Stand der Technik sind zahlreiche Verfahren und Vorrichtungen zur Bestimmung wenigstens einer Strömungseigenschaft fluider Medien, also von Flüssigkeiten und/oder Gasen, bekannt. Bei den Strömungseigenschaften als möglichem Parameter kann es sich dabei um beliebige physikalische und/oder chemische messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln.

Die Erfindung wird im Folgenden insbesondere unter Bezugnahme auf so genannte Heißfilmluftmassenmesser beschrieben, wie sie beispielsweise aus Konrad Reif (Hrsg.): Sensoren im Kraftfahrzeug, 1. Auflage 2010, Seiten 146-148, bekannt sind. Derartige Heißfilmluftmassenmesser basieren in der Regel auf einem Sensorchip, insbesondere einem Silizium-Sensorchip, beispielsweise mit einer Sensormembran als Messoberfläche oder Sensorbereich, welcher von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind, wobei der eine Temperaturfühler stromaufwärts des Heizelements und der andere Temperaturfühler stromabwärts des Heizelements gelagert ist. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden.

Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln.

Dabei durchströmt ein Teilstrom des Mediums wenigstens einen in dem Heißfilmluftmassenmesser vorgesehen Hauptkanal. Zwischen dem Einlass und dem Auslass des Hauptkanals ist ein Bypasskanal ausgebildet. Insbesondere ist der Bypasskanal derart ausgebildet, dass er einen gekrümmten Abschnitt zur Umlenkung des durch den Einlass des Hauptkanals eingetretenen Teilstroms des Mediums aufweist, wobei der gekrümmte Abschnitt im weiteren Verlauf in einen Abschnitt übergeht, in welchem der Sensorchip angeordnet ist. Der zuletzt genannte Abschnitt stellt den eigentlichen Messkanal dar, in dem der Sensorchip angeordnet ist.

Derartige Heißfilmluftmassenmesser müssen in der Praxis einer Vielzahl von Anforderungen genügen. Neben dem Ziel, einen Druckabfall an dem Heißfilmluftmassenmesser insgesamt durch geeignete strömungstechnische Ausgestaltungen zu verringern, besteht eine der hauptsächlichen Herausforderungen darin, die Signalqualität sowie die Robustheit der Vorrichtungen gegenüber Kontamination durch Öl- und Wassertöpfchen sowie Ruß-, Staub- und sonstigen Festkörperpartikeln weiter zu verbessern. Diese Signalqualität bezieht sich beispielsweise auf einen Massenstrom des Mediums durch den zu dem Sensorchip führenden Messkanal sowie gegebenenfalls auf die Verminderung einer Signaldrift und die Verbesserung des Signal-zu-Rauschen-Verhältnisses. Die Signaldrift bezieht sich dabei auf die Abweichung beispielsweise des Massenstroms des Mediums im Sinne einer Veränderung der Kennlinien-Beziehung zwischen dem tatsächlich auftretenden Massenstrom und dem im Rahmen der Kalibrierung bei der Fertigung ermittelten auszugebenden Signal. Bei der Ermittlung des Signal-zu-Rauschen-Verhältnisses werden die in schneller zeitlicher Folge ausgegebenen Sensorsignale betrachtet, wohingegen sich die Kennlinien- oder Signaldrift auf eine Veränderung des Mittelwertes bezieht.

Bei herkömmlichen Heißfilmluftmassenmessern der beschriebenen Art ragt in der Regel ein Sensorträger mit einem darauf angebrachten oder eingebrachten Sensorchip in den Messkanal hinein. Beispielsweise kann der Sensorchip in den Sensorträger eingeklebt oder auf diesen aufgeklebt sein. Der Sensorträger kann beispielsweise mit einem Bodenblech aus Metall, auf welchem auch eine Elektronik, eine Ansteuer- und Auswerteschaltung (beispielsweise mit einem Schaltungsträger, insbesondere einer Leiterplatte) aufgeklebt sein kann, eine Einheit bilden. Beispielsweise kann der Sensorträger als angespritztes Kunststoffteil eines Elektronikmoduls ausgestaltet sein. Der Sensorchip und die Ansteuer- und Auswerteschaltung können beispielsweise durch Bondverbindungen miteinander verbunden werden. Das derart entstandene Elektronikmodul kann beispielsweise in ein Sensorgehäuse eingeklebt werden und der gesamte Steckfühler kann mit Deckeln verschlossen werden.

Die DE 198 15 654 A1 beschreibt eine Messvorrichtung zum Messen der Masse eines in einer Leitung strömenden Mediums. Die Messvorrichtung weist ein von dem strömenden Medium umströmtes Messelement auf, das in einem in der Leitung vorgesehenen Strömungskanal der Messvorrichtung angeordnet ist. Der Strömungskanal erstreckt sich zwischen einer mit der Leitung verbundenen Einlassöffnung und zumindest einer stromabwärts der Einlassöffnung in die Leitung mündenden Auslassöffnung entlang einer Hauptströmungsrichtung. Der Strömungskanal verzweigt sich an einer zwischen der Einlassöffnung und dem Messelement angeordneten ersten Trennstelle in einen Messkanal, in welchem das Messelement angeordnet ist, und einen Umgehungskanal, welcher das Messelement in der Hauptströmungsrichtung umgeht.

Die DE 10 2010 061 348 A1 zeigt eine Messvorrichtung zum Messen der Masse eines strömenden Mediums mit einer in einem zweiteiligen Gehäuse angeordneten Kanalstruktur, die in ein Strömungsrohr eingebracht werden kann. Die Kanalstruktur weist einen von einem Hauptkanal abgezweigten Messkanal auf, in dem ein Sensorchip zur Bestimmung der Masse des strömenden Mediums angeordnet ist. Hierbei sind ein Messkanalauslass der Messkanals und ein Hauptkanalauslass des Hauptkanals auf der gleichen Seite der Messvorrichtung angeordnet.

Die DE 10 2012 211 133 A1 offenbart eine weitere Messvorrichtung zum Messen der Masse eines strömenden Mediums mit einem Hauptkanal und einem von dem Hauptkanal abgezweigten Messkanal, in dem ein Sensorchip zur Bestimmung der Masse des strömenden Mediums angeordnet ist. Bei dieser Messvorrichtung sind der Messkanalauslass des Messkanals und der Hauptkanalauslass des Hauptkanals nicht auf der gleichen Seite der Messvorrichtung angeordnet.

Die EP 0 369 592 A2 offenbart eine Messvorrichtung zum Messen der Masse eines strömenden fluiden Mediums. Die Messvorrichtung weist einen Strömungskanal auf, der eine Einlassöffnung mit einer Auslassöffnung verbindet. Der Strömungskanal verzweigt sich in mehrere weitere Kanäle, von denen einer der eigentliche Messkanal ist, in dem das Sensorelement angeordnet ist.

Üblicherweise weisen die derzeitigen Sensoranordnungen einen einseitigen Auslass aus dem Hauptkanal auf, durch den Partikel und Wasser oder andere Flüssigkeiten, wie beispielsweise Öl, aufgrund ihrer Trägheit wieder ausgeschieden werden können.

Trotz der zahlreichen Vorteile der aus dem Stand der Technik bekannten Verfahren und Vorrichtungen beinhalten dies noch Verbesserungspotenzial bezüglich funktionaler Aspekte. So bedingt der einseitige Auslass, dass der Steckfühler asymmetrisch umströmt wird. Dadurch wird die Empfindlichkeit auf sich ändernde Anströmungsbedingungen, z. B. durch sich zusetzende Filtermatten, erhöht. Solche Kennlinienänderungen werden vom Steuergerat als Drift wahrgenommen, so dass schlimmstenfalls der Heißfilmluftmassenmesser als fehlerhaft diagnostiziert wird, obwohl die Ursache für die Abweichung in der geänderten Anströmung liegt und z. B. ein Filterwechsel das eigentliche Problem lösen würde.

Zudem ist im Gehäusekörper des Sensorgehäuses eine Öffnung für den Schmutzauslass oder, bei Verlagerung des seitlichen Schmutzauslasses in den Deckel, eine Rampe zur Hinführung zur Öffnung vorzusehen. Änderungen im Bypassdeckel sind daher nur soweit möglich, als dass die Position dieser Öffnung oder Rampe gleich bleibt. Für maximale Freiheit beim Design des Bypassdeckels wäre es vorteilhaft, wenn der Gehäusekörper keine Öffnung oder Rampe aufweisen würde, also im Wesentlichen eben im Bereich des Bypassdeckels wäre. Dies würde auch eine deutliche Vereinfachung beim Spritzprozess des Gehäusekörpers bedeuten.

### Offenbarung der Erfindung

Es wird daher eine Sensoranordnung zur Bestimmung wenigstens eines Parameters eines durch eine Kanalstruktur strömenden fluiden Mediums vorgeschlagen, welche die Nachteile bekannter Verfahren und Strategien zumindest weitgehend vermeiden kann und bei der insbesondere die Öffnung oder Rampe im Gehäusekörper dadurch vermieden wird, dass der Schmutzauslass so in den Deckel verlegt wird, dass der Auslass auf die Stirnseite des Steckfühlers oder eine stromabwärtige Seite des Steckfühlers verlagert wird. Dabei wird insbesondere eine asymmetrische Umströmung des Steckfühlers vermieden.

Die erfindungsgemäße Sensoranordnung zur Bestimmung wenigstens eines Parameters eines durch eine Kanalstruktur strömenden fluiden Mediums, insbesondere eines Ansaugluftmassenstroms einer Brennkraftmaschine, umfasst ein Sensorgehäuse, insbesondere einen in ein Strömungsrohr eingebrachten oder einbringbaren Steckfühler, in dem die Kanalstruktur ausgebildet ist. Das Sensorgehäuse weist einen Gehäusekörper und einen Deckel auf. Die Kanalstruktur weist einen Hauptkanal und einen Messkanal auf. In dem Messkanal ist mindestens ein Sensorchip zur Bestimmung des Parameters des fluiden Mediums angeordnet. Das Sensorgehäuse weist einen Einlass in die Kanalstruktur, der einer Hauptströmungsrichtung des fluiden Mediums entgegenweist, mindestens einen Hauptkanalauslass aus dem Hauptkanal und mindestens einen Messkanalauslass aus dem Messkanal auf. Der Hauptkanalauslass ist an einer Stirnseite oder einer bezogen auf die Hauptströmungsrichtung stromabwärtigen Seite des Deckels angeordnet.

Messkanalauslass ist an der gleichen Seite des Deckels wie der Hauptkanalauslass angeordnet. Der Messkanalauslass steht weiter von dem Deckel vor als der Hauptkanalauslass. Der Messkanalauslass kann als kaminartiger Vorsprung ausgebildet sein. Der kaminartige Vorsprung kann einen Kragen aufweisen. Der Hauptkanalauslass kann an einer Stirnseite des Deckels angeordnet sein, wobei der Messkanalauslass bezogen auf die Hauptströmungsrichtung stromabwärts des Hauptkanalauslasses an der Stirnseite des Deckels angeordnet ist. Der Hauptkanalauslass kann bezogen auf die Hauptströmungsrichtung an der stromabwärtigen Seite des Deckels angeordnet sein, wobei sich der Hauptkanal im Wesentlichen parallel zu der Hauptströmungsrichtung erstreckt. Der Hauptkanalauslass und der Messkanalauslass können getrennt voneinander ausgebildet sein. Die Kanalstruktur kann in dem Deckel ausgebildet sein.

Unter der Hauptströmungsrichtung ist im Rahmen der vorliegenden Erfindung die lokale Strömungsrichtung des fluiden Mediums am Ort des Sensors bzw. der Sensoranordnung zu verstehen, wobei beispielsweise lokale Unregelmäßigkeiten, wie z. B. Turbulenzen unberücksichtigt bleiben können. Insbesondere kann unter der Hauptströmungsrichtung somit die lokale gemittelte Transportrichtung des strömenden fluiden Mediums am Ort der Sensoranordnung verstanden werden. Dabei bezieht sich die gemittelte Transportrichtung auf eine Transportrichtung, in der das fluide Medium im zeitlichen Mittel überwiegend strömt.

Unter einer stromabwärtigen Anordnung ist im Rahmen der vorliegenden Erfindung die Anordnung eines Bauteils an einer Stelle zu verstehen, die das fluide Medium in der Hauptströmungsrichtung strömend zeitlich später als einen Bezugspunkt erreicht.

Analog ist im Rahmen der vorliegenden Erfindung unter einer stromaufwärtigen Anordnung eines Bauteils eine Anordnung des Bauteils an einer Stelle zu verstehen, die das in der Hauptströmungsrichtung strömende fluide Medium zeitlich gesehen früher als einen Bezugspunkt erreicht.

Unter einem Gehäusekörper und einem Deckel sind dabei im Rahmen der vorliegenden Erfindung mindestens zwei Bauteile des Sensorgehäuses zu verstehen, welche zusammenwirken und welche beispielsweise in einem unmittelbaren Kontakt stehen, wie beispielsweise eine kraftschlüssige und/oder eine formschlüssige und/oder eine stoffschlüssige Verbindung.

Der Gehäusekörper und der Deckel können jeweils einteilig oder auch mehrteilig ausgestaltet sein. Unter einem Deckel ist dabei allgemein ein Bauteil des Sensorgehäuses zu verstehen, welches um die Auslassöffnung herum eine dem fluiden Medium außerhalb des Sensorgehäuses zuweisende Oberfläche bildet. Der Gehäusekörper ist hingegen ein Bauelement, welches im Bereich der Auslassöffnung auf der dieser Oberfläche gegenüberliegenden Seite des Sensorgehäuses angeordnet ist. Erfindungsgemäß wird vorgeschlagen, den mindestens einen Kanal in dem Deckel auszubilden. Der Gehäusekörper und/oder der Deckel können beispielsweise ganz oder teilweise aus einem Kunststoffmaterial hergestellt sein, wobei jedoch, alternativ oder zusätzlich, auch die Verwendung anderer Materialien möglich ist, beispielsweise keramischer und/oder metallischer Materialien. Der Gehäusekörper und der Deckel können beispielsweise Bestandteil eines Steckfühlers sein.

Die Auslassöffnung kann grundsätzlich einen beliebigen Querschnitt aufweisen, beispielsweise einen runden, ovalen, polygonalen oder auch schlitzförmigen Querschnitt. Die Auslassöffnung kann vorzugsweise auf einer Seitenfläche des Steckfühlers angeordnet sein, welche derart in dem Strömungsrohr angeordnet ist, dass diese vorzugsweise im Wesentlichen parallel zu einer Hauptströmungsrichtung ausgerichtet ist, also mit einer Abweichung von vorzugsweise nicht mehr als 20 °, insbesondere nicht mehr als 10 ° und besonders bevorzugt nicht mehr als 50 ° von einer parallelen Ausrichtung zur Hauptströmungsrichtung.

Weitere mögliche Ausgestaltungen betreffen die Kanalstruktur der Sensoranordnung. Diese Kanalstruktur kann einteilig oder auch mehrteilig ausgestaltet sein. In der Kanalstruktur kann insbesondere mindestens ein Sensorelement zur Erfassung des mindestens einen Parameters aufgenommen sein. Bei diesem Sensorelement kann es sich insbesondere um ein Heißfilmluftmassenmesser-Sensorelement handeln, beispielsweise einen Heißfilmluftmassenmesser-Sensorchip gemäß der obigen Beschreibung. Auch andere Ausgestaltungen sind jedoch alternativ oder zusätzlich möglich.

Die Kanalstruktur kann insbesondere mindestens einen Hauptkanal und mindestens einen von dem Hauptkanal abzweigenden Bypasskanal aufweisen. Das Sensorelement kann insbesondere in dem optionalen mindestens einen Bypasskanal angeordnet sein. Beispielsweise kann sich der Hauptkanal von einer stromaufwärts gelegenen Eintrittsöffnung zu der Austrittsöffnung erstrecken. Der Bypasskanal kann von dem Hauptkanal abzweigen und in einer oder mehreren Bypasskanal-Auslassöffnungen münden, welche beispielsweise ebenfalls auf einer Seitenfläche des Steckfühlers angeordnet sein können und/oder auf einer Kopfseite, welche am weitesten in das strömende fluide Medium hineinragt Auch andere Ausgestaltungen sind jedoch möglich.

Der Deckel kann insbesondere eine dem fluiden Medium zuweisende Außenseite aufweisen. Diese Außenseite kann beispielsweise dem fluiden Medium außerhalb des Sensorgehäuses, insbesondere in dem Strömungsrohr, zuweisen und kann beispielsweise von dem fluiden Medium in dem Strömungsrohr umströmt oder umspült werden.

Ein Grundgedanke der vorliegenden Erfindung ist, die Öffnung oder Rampe im Gerätegehäuse dadurch zu vermeiden, dass der Schmutzauslass so in den Deckel verlegt wird, dass der Auslass auf die Stirnseite des Steckfühlers oder eine stromabwärtige Seite des Steckfühlers verlagert wird. Die durch den Heißfilmluftmassenmesser bedingte Asymmetrie in der Umströmung wird dadurch ebenfalls beseitigt. Dadurch lässt sich die Empfindlichkeit gegenüber veränderten Anströmungsbedingungen verringern.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind. Es zeigen:
- Figur 1: eine perspektivische Darstellung einer Sensoranordnung gemäß einer ersten Ausführungsform,
- Figur 2: eine Schnittansicht parallel zu der Hauptströmungsrichtung und einer Erstreckungsrichtung des Steckfühlers der Sensoranordnung,
- Figur 3: eine erste Modifikation der ersten Ausführungsform,
- Figur 4: eine zweite Modifikation der ersten Ausführungsform,
- Figur 5: eine Schnittansicht parallel zu der Hauptströmungsrichtung und parallel zu einer Erstreckungsrichtung des Steckfühlers der Sensoranordnung gemäß einer zweiten Ausführungsform und
- Figur 6: eine Modifikation der zweiten Ausführungsform.

### Ausführungsformen der Erfindung

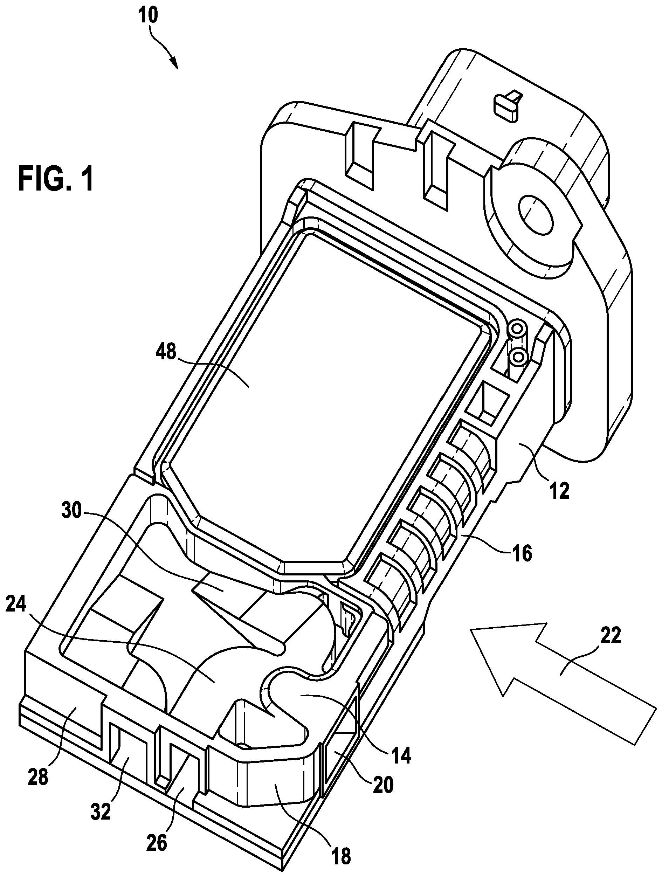

Figur 1 zeigt eine perspektivische Darstellung einer Sensoranordnung 10 zur Bestimmung eines Parameters eines durch einen Kanal strömenden fluiden Mediums gemäß einer ersten, nicht erfindungsgemäßen Ausführungsform. Die Sensoranordnung 10 ist in diesem Ausführungsbeispiel als Heißfilmluftmassenmesser ausgestaltet und kann insbesondere einen Ansaugluftmassenstrom einer Brennkraftmaschine erfassen. Bei diesem Ausführungsbeispiel umfasst die Sensoranordnung 10 ein Sensorgehäuse 12. Das Sensorgehäuse 12 ist als Steckfühler ausgebildete, welcher beispielsweise in ein Strömungsrohr, insbesondere einen Ansaugtrakt der Brennkraftmaschine, eingesteckt werden kann. In dem Sensorgehäuse 12 ist eine Kanalstruktur 14 ausgebildet, wie nachstehend ausführlicher erläutert wird. Das Sensorgehäuse 12 weist einen Gehäusekörper 16 und einen Deckel 18 auf. Die Kanalstruktur 14 ist in dem Deckel 18 ausgebildet. Durch die Kanalstruktur 14 kann über eine Einlassöffnung bzw. einen Einlass 20, der im eingesetzten Zustand einer Hauptströmungsrichtung 22 des fluiden Mediums entgegenweist, eine repräsentative Menge des fluidem Mediums strömen.

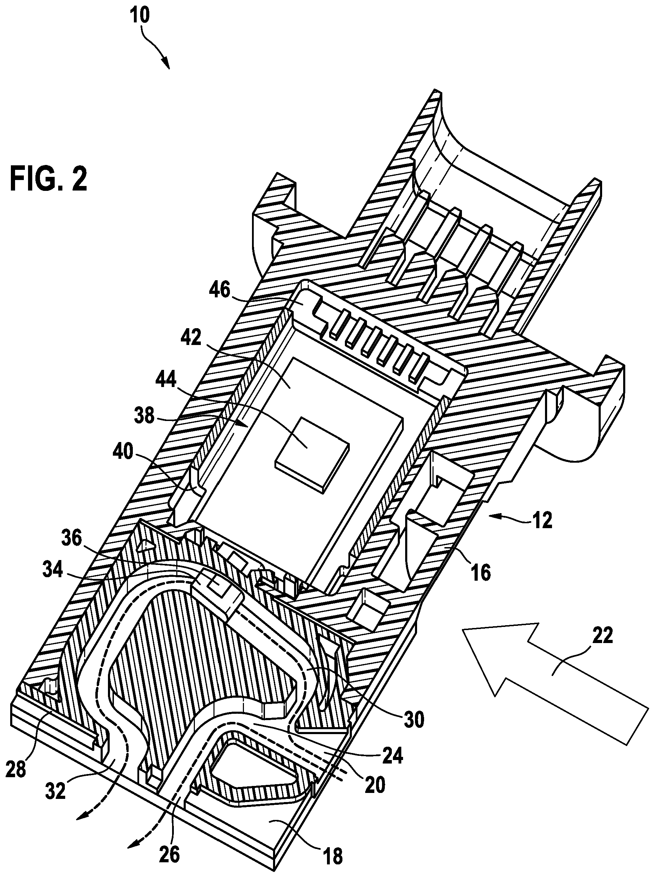

Figur 2 zeigt eine Schnittansicht parallel zu der Hauptströmungsrichtung und einer Erstreckungsrichtung des Sensorgehäuses 12 der Sensoranordnung 10. Die Kanalstruktur 14 weist einen Hauptkanal 24 auf, welcher in einen Hauptkanalauslass 26 auf einer Stirnseite 28 des Sensorgehäuses 12 und genauer des Deckels 16 bezogen auf die Darstellung in Figur 1 mündet, sowie einen von dem Hauptkanal 24 abzweigenden Bypass- bzw. Messkanal 30, welcher in einen ebenfalls an der Stirnseite 28 angeordneten Messkanalauslass 32 des Messkanals 30 mündet. Somit ist der Messkanalauslass 32 an der gleichen Seite des Deckels 18 wie der Hauptkanalauslass 26 angeordnet. Des Weiteren ist aus Figur 2 zu erkennen, dass der Messkanalauslass 32 bezogen auf die Hauptströmungsrichtung 22 stromabwärts des Hauptkanalauslasses 26 an der Stirnseite 28 angeordnet ist. Der Hauptkanalauslass 26 und der Messkanalauslass 32 sind dabei getrennt voneinander ausgebildet.

In den Messkanal 30 ragt wie bei herkömmlichen Luftmassenmessern ein Sensorträger 34 in Form eines Flügels. In diesem Sensorträger 34 ist ein Sensorchip 36 derart eingelassen, dass eine als Sensorbereich des Sensorchips 36 ausgebildete Sensormembran von dem fluiden Medium überströmt wird. Der Sensorträger 34 ist mit dem Sensorchip 36 Bestandteil eines Elektronikmoduls 38, das ein gebogenes Bodenblech 40 sowie eine darauf angebrachte, beispielsweise aufgeklebte, Leiterplatte 42 mit einer Ansteuer- oder Auswerteschaltung 44 aufweist. Der Sensorträger 34 kann beispielsweise als Kunststoffbauteil an das Bodenblech 40 angespritzt sein. Der Sensorträger 34, welcher beispielsweise als Spritzgussbauteil an das Bodenblech 40 angespritzt ist und dann mit dem Bodenblech 40 der Leiterplatte 42 integral ausgebildet sein kann, ist mit einer Anströmkante versehen, welche abgerundet ausgestaltet sein kann.

Der Sensorchip 36 ist mit der Ansteuer- und Auswerteschaltung 44 über elektrische Verbindungen, die als Drahtbonding ausgestaltet sein können, elektrisch verbunden. Das derart entstandene Elektronikmodul 38 wird in einen Elektronikraum 46 des Sensorgehäuses 12 und genauer des Gehäusekörpers 16 eingebracht, wie beispielsweise eingeklebt. Dies kann derart erfolgen, dass der Sensorträger 34 dabei in die Kanalstruktur 14 hineinragt, wie in Figur 2 gezeigt ist. Anschließend wird der Elektronikraum 46 durch einen Elektronikraumdeckel 48 verschlossen.

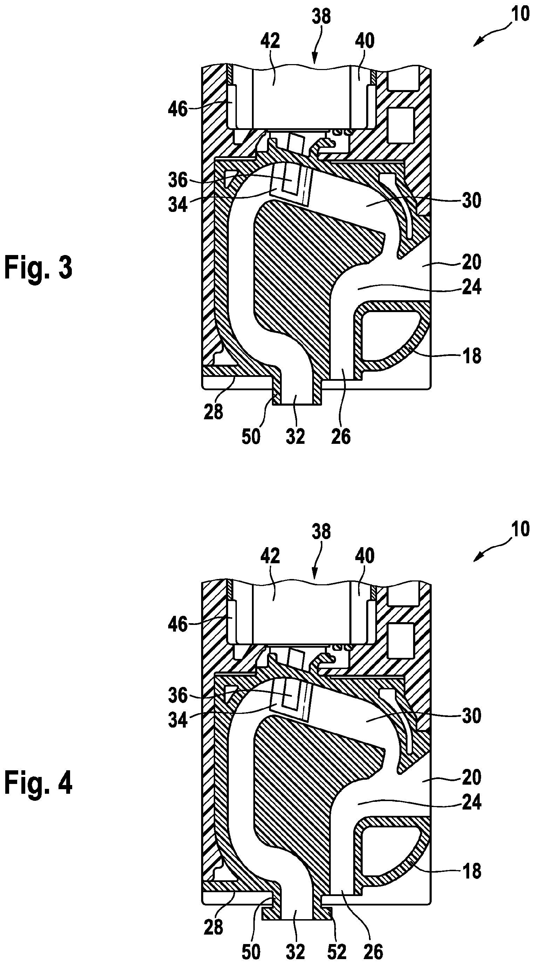

Figur 3 zeigt eine Schnittansicht der Sensoranordnung 10 der ersten Ausführungsform gemäß einer ersten, erfindungsgemäßen Modifikation. Der Schnitt verläuft dabei parallel zu der Hauptströmungsrichtung 22 und parallel zu einer Erstreckungsrichtung des Sensorgehäuses 12. Nachstehend werden lediglich die Unterschiede zu der ersten Ausführungsform beschrieben und gleiche Bauteile sind mit gleichen Bezugszeichen versehen. In Figur 3 ist die Kanalstruktur 14 zu erkennen. Des Weiteren ist zu erkennen, dass der Messkanalauslass 32 weiter von dem Deckel 18 vorsteht als der Hauptkanalauslass 26. Beispielsweise ist der Messkanalauslass 32 als kaminartiger Vorsprung 50 ausgebildet. Wesentlich für den erzielten Effekt der erfindungsgemäßen Sensoranordnung 10 ist die erzielte Minimierung der Interaktion von dem Hauptkanalauslass 26 mit dem Messkanalauslass 32. Idealerweise werden diese beiden Auslässe 26, 32 vollständig voneinander getrennt. Praktisch wird eine sehr gute Trennung dadurch erreicht, dass wie oben beschrieben die beiden Auslässe geometrisch voneinander versetzt sind. Verstärkt wird diese Wirkung durch den kaminartigen Vorsprung 50. Dieser ragt also weiter in die Umströmung des Sensorgehäuses 12 als der Hauptkanalauslass 26. Je weiter der kaminartige Vorsprung 50 von dem Deckel 18 in die Umströmung des Sensorgehäuses 12 vorsteht, desto besser die Trennung. Als Mindestmaß für den kaminartigen Vorsprung 50 sind erfindungsgemäß 2 mm vorgesehen. Figur 4 zeigt eine Schnittansicht der Sensoranordnung 10 der ersten Ausführungsform gemäß einer zweiten, erfindungsgemäßen Modifikation. Der Schnitt verläuft dabei parallel zu der Hauptströmungsrichtung 22 und parallel zu einer Erstreckungsrichtung des Sensorgehäuses 12. Nachstehend werden lediglich die Unterschiede zu der ersten Ausführungsform und der ersten Modifikation beschrieben und gleiche Bauteile sind mit gleichen Bezugszeichen versehen. Der für die erste Modifikation beschriebene Effekt wird weiter dadurch verbessert, dass der kaminartige Vorsprung 50 einen Kragen 52 aufweist. Der Kragen 52 umgibt dabei den Vorsprung 50 bzw. den Messkanalauslass 32. Durch diese besondere Geometrie des kaminartigen Vorsprungs 50 wird erreicht, dass eine Einströmung von Teilchen, die von dem Hauptkanalauslass 26 ausgehend in der Hauptströmungsrichtung 22 strömen, in den Messkanalauslass 32 verhindert wird.

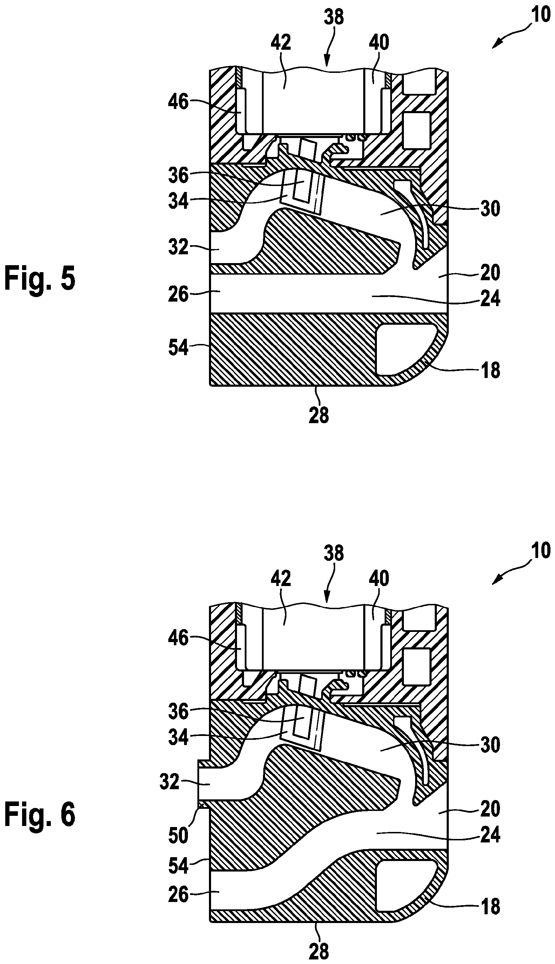

Figur 5 eine Schnittansicht parallel zu der Hauptströmungsrichtung 22 und einer Erstreckungsrichtung des Sensorgehäuses 12 der Sensoranordnung 10 gemäß einer zweiten, nicht erfindungsgemäßen Ausführungsform. Nachfolgend werden lediglich die Unterschiede zu der ersten Ausführungsform beschrieben und gleiche Bauteile sind mit gleichen Bezugszeichen versehen.

Bei der Sensoranordnung 10 der zweiten Ausführungsform ist der Hauptkanalauslass 26 an einer stromabwärtigen Seite 54 des Deckels 18 angeordnet. Der Messkanalauslass 32 ist ebenfalls an der stromabwärtigen Seite 54 des Deckels 18 angeordnet. Entsprechend ist auch bei der zweiten Ausführungsform der Messkanalauslass 32 an der gleichen Seite des Deckels 18 wie der Hauptkanalauslass 26 angeordnet. Der Hauptkanal 24 erstreckt sich dabei im Wesentlichen parallel zu der Hauptströmungsrichtung 22, bevorzugt mit einer Abweichung von nicht mehr als 20 ° und besonders bevorzugt von nicht mehr als 10 ° von der Hauptströmungsrichtung 22. Der Hauptkanal 24 ist insbesondere gerade ausgebildet. Da bei dieser zweiten Ausführungsform der Hauptkanalauslass 26 und der Messkanalauslass 32 im Windschatten des Sensorgehäuses 12 liegen, wird eventuell weniger Luft durch den Messkanalauslass 32 gezogen. Das Signal des Sensorchips 36 kann dadurch schwächer und somit empfindlicher werden.

Figur 6 zeigt eine Schnittansicht der Sensoranordnung 10 der zweiten Ausführungsform gemäß einer erfindungsgemäßen Modifikation. Der Schnitt verläuft dabei parallel zu der Hauptströmungsrichtung 22 und parallel zu einer Erstreckungsrichtung des Sensorgehäuses 12. Nachstehend werden lediglich die Unterschiede zu der zweiten Ausführungsform beschrieben und gleiche Bauteile sind mit gleichen Bezugszeichen versehen. Der Hauptkanal 24 ist nicht gerade ausgebildet, sondern leicht geschwungen. Mit zunehmender Läuflänge in Richtung zu der stromabwärtigen Seite 54 des Deckels entfernt sich der Hauptkanal 24 von dem Messkanal 30. Des Weiteren steht auch hier der Messkanalauslass 32 weiter von dem Deckel 18 vor als der Hauptkanalauslass 26. Optional kann auch hier der Messkanalauslass 32 als kaminartiger Vorsprung 50 ausgebildet sein.

## Patentansprüche

1. Sensoranordnung (10) zur Bestimmung wenigstens eines Parameters eines durch eine Kanalstruktur (14) strömenden fluiden Mediums, insbesondere eines Ansaugluftmassenstroms einer Brennkraftmaschine, wobei die Sensoranordnung (10) ein Sensorgehäuse (12), insbesondere einen in ein Strömungsrohr eingebrachten oder einbringbaren Steckfühler (12), in dem die Kanalstruktur (14) ausgebildet ist, aufweist, wobei das Sensorgehäuse (12) einen Gehäusekörper (16) und einen Deckel (18) aufweist, wobei die Kanalstruktur (14) einen Hauptkanal (24) und einen Messkanal (30) aufweist, wobei in dem Messkanal (30) mindestens ein Sensorchip (36) zur Bestimmung des Parameters des fluiden Mediums angeordnet ist, wobei das Sensorgehäuse (12) einen Einlass (20) in die Kanalstruktur (14), der einer Hauptströmungsrichtung (22) des fluiden Mediums entgegenweist, mindestens einen Hauptkanalauslass (26) aus dem Hauptkanal (24) und mindestens einen Messkanalauslass (32) aus dem Messkanal (30) aufweist,
wobei der Hauptkanalauslass (26) an einer Stirnseite (28) oder einer bezogen auf die Hauptströmungsrichtung (22) stromabwärtigen Seite (54) des Deckels (18) angeordnet ist, wobei der Messkanalauslass (32) an der gleichen Seite des Deckels (18) wie der Hauptkanalauslass (26) angeordnet ist, **dadurch gekennzeichnet, dass** der Messkanalauslass (32) weiter von dem Deckel (18) vorsteht als der Hauptkanalauslass (26).

2. Sensoranordnung (10) nach dem vorhergehenden Anspruch, wobei der Messkanalauslass (32) als kaminartiger Vorsprung (50) ausgebildet ist.

3. Sensoranordnung (10) nach dem vorhergehenden Anspruch, wobei der kaminartige Vorsprung (50) einen Kragen (52) aufweist.

4. Sensoranordnung (10) nach einem der Ansprüche 1 bis 3, wobei der Hauptkanalauslass (26) bezogen auf die Hauptströmungsrichtung (22) an der stromabwärtigen Seite (54) des Deckels (18) angeordnet ist, wobei sich der Hauptkanal (24) im Wesentlichen parallel zu der Hauptströmungsrichtung (22) erstreckt.

5. Sensoranordnung (10) nach einem der vorhergehenden Ansprüche, wobei der Hauptkanalauslass (26) und der Messkanalauslass (32) getrennt voneinander ausgebildet sind.

6. Sensoranordnung (10) nach einem der vorhergehenden Ansprüche, wobei die Kanalstruktur (14) in dem Deckel (18) ausgebildet ist.

## Claims

1. Sensor arrangement (10) for determining at least one parameter of a fluid medium flowing through a duct structure (14), in particular an intake air mass flow of an internal combustion engine, wherein the sensor arrangement (10) has a sensor housing (12), in particular a plug-in sensor (12) which is inserted or can be inserted into a flow pipe and in which the duct structure (14) is formed, wherein the sensor housing (12) has a housing body (16) and a cover (18), wherein the duct structure (14) has a main duct (24) and a measuring duct (30), wherein at least one sensor chip (36) for determining the parameter of the fluid medium is arranged in the measuring duct (30), wherein the sensor housing (12) has an inlet (20) into the duct structure (14), which inlet faces counter to a main flow direction (22) of the fluid medium, at least one main duct outlet (26) out of the main duct (24) and at least one measuring duct outlet (32) out of the measuring duct (30), wherein the main duct outlet (26) is arranged on an end side (28) or a side (54), which is downstream with respect to the main flow direction (22), of the cover (18), wherein the measuring duct outlet (32) is arranged on the same side of the cover (18) as the main duct outlet (26), **characterized in that** the measuring duct outlet (32) projects further than the main duct outlet (26) from the cover (18).

2. Sensor arrangement (10) according to the preceding claim, wherein the measuring duct outlet (32) is designed as a chimney-like projection (50).

3. Sensor arrangement (10) according to the preceding claim, wherein the chimney-like projection (50) has a collar (52).

4. Sensor arrangement (10) according to one of Claims 1 to 3, wherein the main duct outlet (26) is arranged on the side (54), which is downstream with respect to the main flow direction (22), of the cover (18), wherein the main duct (24) extends substantially parallel to the main flow direction (22).

5. Sensor arrangement (10) according to one of the preceding claims, wherein the main duct outlet (26) and the measuring duct outlet (32) are formed separately from one another.

6. Sensor arrangement (10) according to one of the preceding claims, wherein the duct structure (14) is formed in the cover (18).

## Revendications

1. Système de détection (10) servant à déterminer au moins un paramètre d'un milieu fluide circulant dans une structure de conduit (14), en particulier un débit massique d'air d'admission d'un moteur à combustion interne, dans lequel le système de détection (10) présente un boîtier de capteur (12), en particulier un capteur enfichable (12) introduit ou pouvant être introduit dans un tuyau d'écoulement dans lequel est formée la structure de conduit (14), le boîtier de capteur (12) présentant un corps de boîtier (16) et un couvercle (18), dans lequel la structure de conduit (14) présente un conduit principal (24) et un conduit de mesure (30), au moins une puce de détection (36) étant disposée dans le conduit de mesure (30) pour déterminer le paramètre du milieu fluide, dans lequel le boîtier de capteur (12) présente un orifice d'entrée (20) dans la structure de conduit (14), qui est orienté à l'opposé d'une direction d'écoulement principale (22) du milieu fluide, au moins un orifice de sortie de conduit principal (26) sortant du conduit principal (24) et au moins un orifice de sortie de conduit de mesure (32) sortant du conduit de mesure (30), dans lequel l'orifice de sortie de conduit principal (26) est disposé sur une face frontale (28) ou sur une face (54) en aval du couvercle (18) par rapport à la direction d'écoulement principale (22), dans lequel l'orifice de sortie de conduit de mesure (32) est disposé sur la même face du couvercle (18) que l'orifice de sortie de conduit principal (26), **caractérisé en ce que** l'orifice de sortie de conduit de mesure (32) fait saillie du couvercle (18) plus loin que l'orifice de sortie de conduit principal (26).

2. Système de détection (10) selon la revendication précédente, dans lequel l'orifice de sortie de conduit de mesure (32) est réalisé sous forme de saillie (50) de type cheminée.

3. Système de détection (10) selon la revendication précédente, dans lequel la saillie (50) de type cheminée présente un col (52).

4. Système de détection (10) selon l'une quelconque des revendications 1 à 3, dans lequel l'orifice de sortie de conduit principal (26) est disposé sur la face (54) en aval du couvercle par rapport à la direction d'écoulement principale (22), le conduit principal (24) s'étendant substantiellement en parallèle à la direction d'écoulement principale (22).

5. Système de détection (10) selon l'une quelconque des revendications précédentes, dans lequel l'orifice de sortie de conduit principal (26) et l'orifice de sortie de conduit de mesure (32) sont réalisés séparément l'un de l'autre.

6. Système de détection (10) selon l'une quelconque des revendications précédentes, dans lequel la structure de conduit (14) est réalisée dans le couvercle (18).
